(19) Europäisches Patentamt
European Patent Office
Office européen des brevets

(11) **EP 1 832 988 A1**

(12) **EUROPÄISCHE PATENTANMELDUNG**

(43) Veröffentlichungstag:
**12.09.2007   Patentblatt 2007/37**

(51) Int Cl.:
***G06F 17/30*** *(2006.01)*

(21) Anmeldenummer: 06004449.2

(22) Anmeldetag: **06.03.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Siemens Schweiz AG**
**8047 Zürich (CH)**

(72) Erfinder:
• **Preisig, Daniel**
**8200 Schaffhausen (CH)**

• **Schwarz, Stefan**
**5420 Ehrendingen (CH)**
• **Tran, Long**
**8047 Zürich (CH)**

(74) Vertreter: **Kley, Hansjörg**
**Siemens AG**
**Postfach 22 16 34**
**80506 München (DE)**

(54) **Verfahren zur Nachführung von Daten für eine mobile Anwendung**

(57)   Für die Nachführung von in Datensätzen gegliederten auftragsbezogenen Daten auf einer mobilen Anwendung (10) wird ein Verfahren vorgeschlagen, bei dem in einer Middleware (20) eine Journaldatei geführt wird, in der der Änderungszustand eines jeden Datensatzes pro mobiler Anwendung geführt wird. Dadurch brauchen bei Änderungen wie Löschung, Modifikation oder Kreierung eines Datensatzes nur der oder die betreffenden Datensätze übermittelt zu werden.

**Fig. 1**

**Beschreibung**

Die vorliegende Erfindung betrifft ein Verfahren zur Nachführung von Daten für eine mobile Anwendung gemäss dem Oberbegriff des Patentanspruches 1. Statt mobile Anwendung wird in dieser Schrift synonym von einer Anwendung auf einem portablen Gerät gesprochen.

Im folgenden wird anstelle einer deutschen Nichtfachsprache teilweise eine englisch-sprachige Nomenklatur benutzt, wie z.B, «mobile commerce server» oder «middleware» um aus den zitierten Dokumenten den technischen Inhalt korrekt wieder zu geben. Dadurch lassen sich Unklarheiten vermeiden. Ebenso werden allgemein bekannte kurze englischsprachige Begriffe anstelle einer deutschen Nichtfachsprache verwendet wie z.B. «update», «deleted» usw. Eine Liste der verwendeten Abkürzungen und Begriffe am Schluss dieses Dokumentes ist integraler Bestandteil dieser Schrift.

Für mobile Anwendungen im Bereich «Field Service & Logistic» ist es entscheidend, dass eine Vielzahl verteilter und persönlich zugeschnittener Arbeitsstationen jederzeit eine jederzeit aktuelle Datenbasis zur Verfügung gestellt erhalten. Dies bedingt einen regelmässiger und umfassender Abgleich, d.h. Synchronisation von Daten auf einem Zentralrechner (Server) mit verschiedensten mobilen Arbeitsstationen (Clients). Da die mobilen Arbeitsstationen (Pocket PC oder Laptop) in der Regel über eine bezüglich Übertragungskapazität beschränkte Anbindung an den zentralrechner verfügen, ist für ein Aktualisierungsvorgang eine grosse Wartezeit und entsprechend dem Kommunikationsvolumen entsprechend hohe Kommunikationskosten die Folge.

Bisher wurden Daten komplett übertragen und die alte Datenbasis durch die neue vollständig ersetzt. Es resultiert eine grosse Wartezeit und hohe Kommunikationskosten. Alternativ kann die Datenmenge eingeschränkt werden, wodurch die Benutzerfreundlichkeit bzw. der Informationsgrad der vorhandenen Daten leidet.

In der Schrift US 2003/0233266 A1 [1] wird ein System und ein Verfahren für Mobile Commerce offenbart, bei dem die Pläne und/oder Auftragsdaten auf einem «mobile commerce server» nachgeführt werden gemäss den durch einen Benutzer auf einem mobilen Terminal eingegeben Daten/Ereignissen. Aus dieser Schrift ist zu entnehmen, dass nicht die gesamte Datenbasis, wohl aber die Gesamtheit eines auftragsbezogenen Datensatzes nachgeführt und ggf. übertragen wird. Dies ist immer noch mit dem Nachteil behaftet, dass hiefür relativ erhebliche Kommunikationskosten und nicht gerade sehr kurze Übertragungszeiten erforderlich sind.

Eine optimale Nachführung von geänderten Datensätzen ist deshalb nicht so einfach zu realisieren, weil diesen Systemen eine Architektur zugrunde liegt, wie sie z.B. in WO 2004/055659 A1 [2] gezeigt ist. Eine Mehrzahl von mobilen Teilnehmergeräten ist zeitweise mit einem Zentralserver verbindbar. Ein Laufzeitsystem (runtime environment program) auf dem Teilnehmergerät sorgt im Falle einer Verbindung für die Nachführung der Daten.

Der vorliegenden Erfindung liegt daher die Aufgabe zugrunde, ein Verfahren für die Nachführung von auftragsbezogenen Daten auf einem mobilen Terminal der vorstehend genannten Art anzugeben, bei dem für die Nachführung der auftragsbezogenen Daten minimale Datenvolumina und damit minimale Kommunikationskosten und möglichst geringe Übertragungszeiten erforderlich sind.

Diese Aufgabe wird die im Patentanspruch 1 angegebenen Merkmale gelöst.

Durch das erfindungsgemässe Verfahren, wonach

«im Zentralserver eine Journal-Datei geführt wird, in der der Änderungszustand eines Datensatzes geführt wird und bei einer Verbindung zwischen zentralserver und portablen Gerät nur jene Datensätze übertragen werden, für die in der Journaldatei ein Änderungskennzeichen eingetragen ist»;

ist ein Mechanismus geschaffen - auch «Delta-Update» genannt - zwischen einem Zentralserver mit Datenbank und verteilten, mobilen Arbeitsstationen mit dem Zweck, auf den mobilen Arbeitsstationen jederzeit ein aktuelles Abbild der auf dem Zentralserver gespeicherten Geschäftsdaten zur Verfügung zu stellen. Wesentlich dabei ist, dass die Menge der ausgetauschten Geschäftsdaten auf einem Minimum gehalten wird und somit einerseits die Kommunikationskosten (z.B. Mobilkommunikation über GPRS) und andererseits die Wartezeit für den Datenabgleich entscheidend minimiert wird.

Der vorliegende Ansatz geht davon aus, dass der Zentralrechner ein Journal der wesentlichen Datenänderungen mitschreibt, um so bei einer Synchronisationsanfrage seitens der Anwendungen mobiler Arbeitsstation nur die Änderungen zur Übertragung zurückzuschicken. Es wird also nur die Differenz seit der letzten Aktualisierung übertragen. Zusammen mit der Anfrage der mobilen Anwendung wird dazu ein zeitstempel der letzten erfolgreichen Aktualisierung sowie eine Identifikationsnummer des anfragenden Terminals als Parameter mit gesendet.

Weitere vorteilhafte Ausgestaltungen der Erfindung sind in weiteren Ansprüchen angegeben.

Die Erfindung wird nachfolgend anhand der Zeichnung beispielsweise näher erläutert. Dabei zeigen:

Figur 1    Architekturübersicht;
Figur 2    Datensatz für die Nachführung von Nutzdatensätzen;
Figur 3    Zustandsübergänge für die Nachführung der Nutzdatensätze.

Im Sinne dieser Schrift wird zur Klarstellung folgende Nomenklatur verwendet:

Geschäftsdaten, Nutzdaten beinhalten die Daten der Anwendung für z.B. einen Service-Techniker wie Auftragsnummer, Anlagennummer, Kundennummer, Kundenname, Kundenadresse, Aufwendungen in h oder in CHF, usw. Die Daten welche den Änderungszustand dieser Geschäftsdaten beschreiben werden nicht mit einem besonderen Begriff belegt, sondern in ihrer konkreten Ausprägung einfach als Daten bezeichnet.

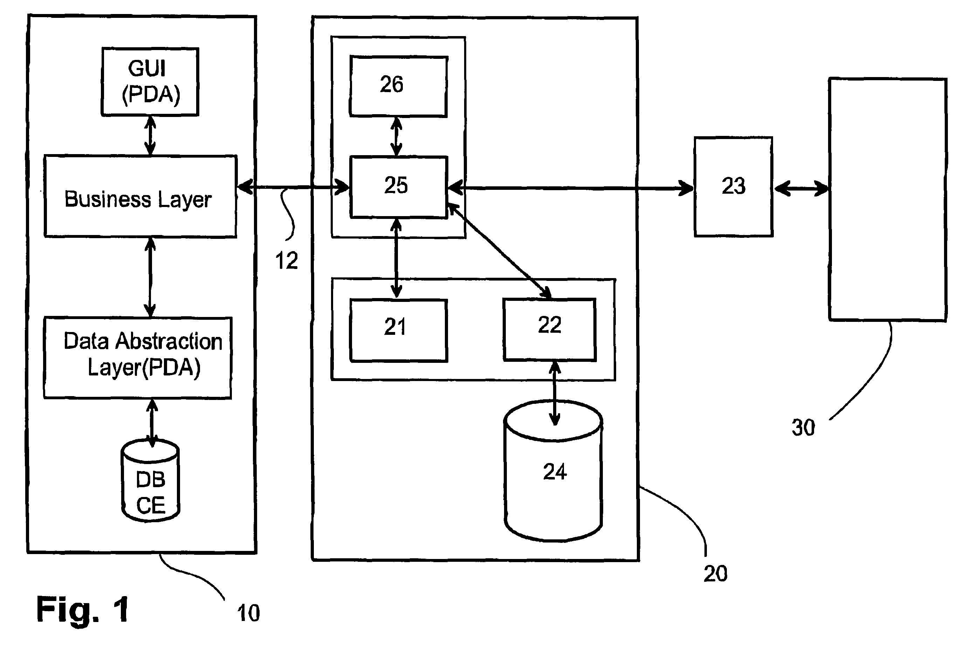

In Figur 1 ist eine Architekturübersicht gegeben, die das Umfeld der vorliegenden Erfindung darstellt. Links ist ein portables Gerät mit einer Anwendung 10 dargestellt, die eine Grobstruktur mit Mensch-Maschinenschnittstelle GUI, Business Layer, Data Abstraction Layer und eine Datenbasis DB CE umfasst. Mit DB CE ist einfach ein Betriebssystemspezifischen Datenbasis bezeichnet, die für die Ausführung der vorliegenden Erfindung nicht erheblich ist. In diesem Ausführungsbeispiel sind ferner produktspezifische/herstellerspezifische Komponenten wie z.B. der SAP-Business-Connector 23 (darüber hinaus ein Fremdprodukt von SAP) oder ein ERP-System von SAP genannt. Die Erfindung ist keineswegs auf eine solche spezifische Umgebung beschränkt, sondern produkt- und herstellerneutral ausführbar.

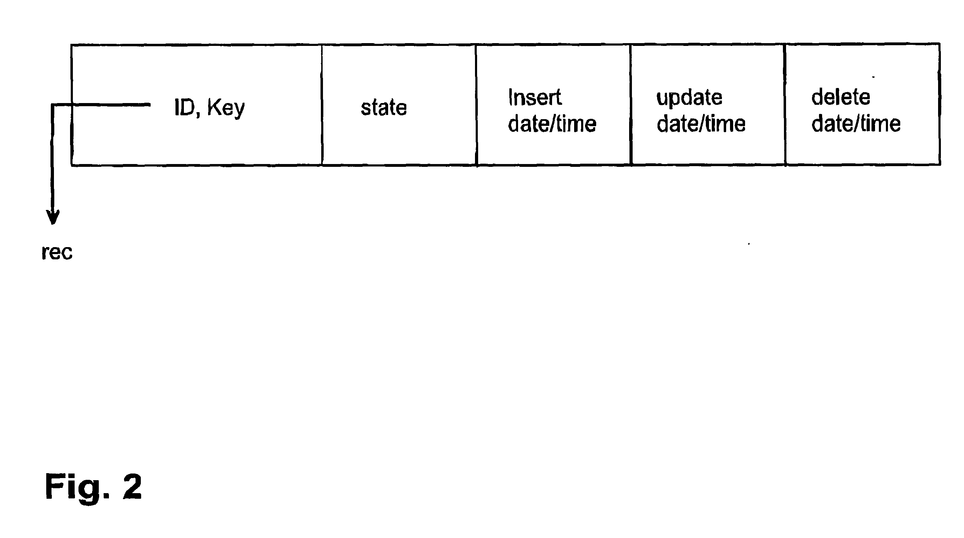

Die Nachführung der Daten auf der mobilen Anwendung benutzt eine Hilfsdatei, die hier Journaldatei genannt wird. Der Zentralrechner 20 schreibt ein Journal der Änderungen der Geschäftsdaten mit, wobei diese Änderungen in eine Journal-datei geschrieben werden, deren Datensätze eine Struktur gemäss der Figur 2 aufweist. Bei einer Synchronisationsanfrage seitens der mobilen Anwendung 10 brauchen so nur die Änderungen über die Übertragungsstrecke 12 gesandt zu werden. Es wird also nur die Differenz seit der letzten Aktualisierung übertragen. Zusammen mit der Anfrage der mobilen Anwendung 10 wird dazu ein Zeitstempel der letzten erfolgreichen Aktualisierung sowie eine Identifikationsnummer des anfragenden Terminals als Parameter mitgesendet. Diese Identifikationsnummer ist deshalb erforderlich, damit in der Middleware bekannt ist, welcher Nutzdatensatz an welche mobile Anwendung gesandt werden soll, da eine mobile Anwendung und die darunter liegenden Daten in aller Regel genau einer Person (=Servicetechniker) zuzuordnen sind bzw. zugeordnet sind.

Vorzugsweise wird pro mobile Anwendung eine solche Journal-datei geführt. Es ist auch möglich, die vorgenannte Identifikation in einer einzigen Journaldatei mit den Feldern gemäss der Figur 2 zu implementieren. Die Felder eines Records gemäss der Figur 2 haben folgende Bedeutung:

| | |
|---|---|
| ID, Key | Zeiger, pointer oder Schlüssel auf einen Nutzdatensatz. Zu beachten ist, dass das Bezugszeichen ID hier nichts zu tun hat mit der vorgenannten Identität, die eine mobile Anwendung kennzeichnet, dies wäre in einem separaten Feld dieses Records unterzubringen und ist in der Figur 2 nicht dargestellt. |
| Delete date/time | Zeitstempel der Löschung eines Datensatzes in der Datenbank 24. |
| Update date/time | Zeitstempel der letzten Nachführung des betreffenden Datensatzes auf der mobilen Anwendung. |
| Insert date/time | Zeitstempel der Erzeugung eines Datensatzes in der Datenbank 24, z.B. aufgrund eines neuen Service-Auftrages an das betreffende Unternehmen. |

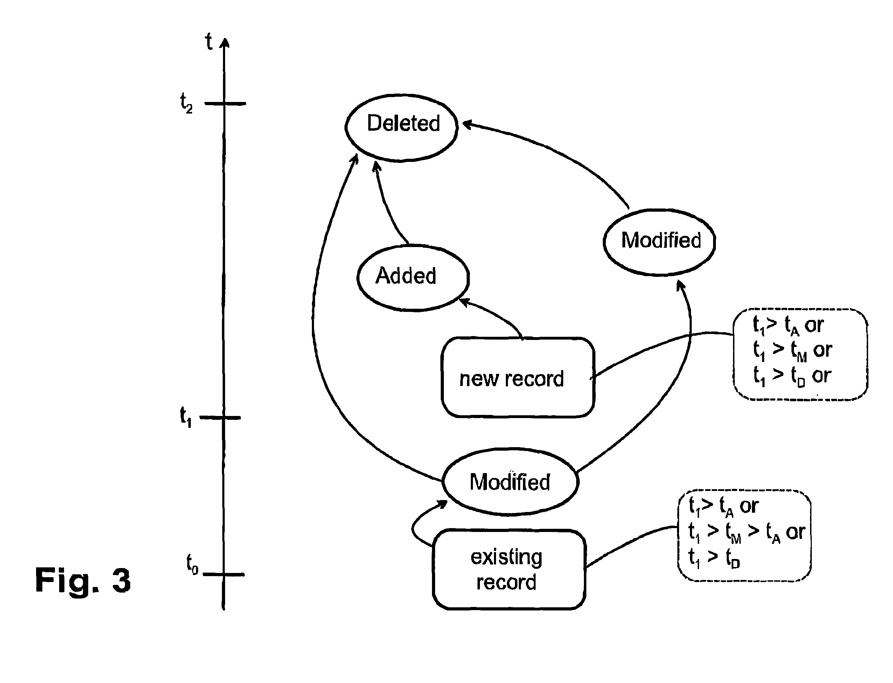

Mit den vorgenannten zeitstempeln ergibt sich nun gemäss Figur 3 ein Zustandsübergangsdiagramm. Mit $t_0$, $t_1$, $t_2$ sind Nachführzeitpunkte bezeichnet, die der folgenden Ordnungsrelation genügen: $t_0 < t_1 < t_2$ . Die Bedingungen für einen neu erzeugten Datensatz «new record» bzw. für die Änderung eines bereits existierenden Datensatzes «existing record» sind in Figur 3 angegeben.

In der Journaldatei ist zweckmässigerweise vorgesehen, dass in der mobilen Anwendung als gelöscht markierte Datensätze ab einem gewissen Zeitstempel, also mit der Bedingung

$$(t_A + t_w) < t_D \quad \text{and} \quad (t_m + t_w) < t_D$$

nicht mehr geführt werden. Dabei bezeichnet $t_w > 0$ eine Wartezeit oder Latenzzeit von einer festen Länge.

Mit den vorgenannten Zeitstempeln ist damit im Journal der Änderungszustand der Datensätze, nämlich in den Ausprägungen

- eingefügt,
- geändert und
- gelöscht

ableitbar über die Funktion
max $\{ t_A , , t_D , t_m \}$ .

Nicht dargestellt in Figur 2 wäre auch eine Implementation wo der vorgenannte Änderungszustand selber nachgeführt wird, z.B. in einem Feld von 2 Bit und dass die Zeitstempel nicht obligatorischerweise auch in der Journaldatei enthalten sind.

Nicht mehr geführt wird - wie vorstehend erwähnt - ein als gelöscht markierter Datensatz, d.h. ein solcher Datensatz gemäss der Struktur von Figur 2 wird in der Journaldatei gelöscht. Dies bedeutet in aller Regel nicht, dass der Nutzdatensatz in der Datenbank 24 auch gelöscht wird, da dieser Datensatz meist Angaben zur späteren Fakturierung enthält. Ein solcher Datensatz wird dann über den SAP - Business Konnektor 23 zum ERP SAP R/3 System 30 zur weiteren Verarbeitung zurückgespiegelt. Dadurch ist auch die Funktion der Middleware 20 erläutert: Pufferung der Datensätze zwischen dem eigentlichen Auftragsmanagementsystem 30 und den mobilen Anwendungen 10. Ob nach Zurückspiegelung dieses Nutzdatensatzes dieser noch auf der Datenbank 24 geführt wird, ist für die vorliegende Erfindung unerheblich.

Je nach Anwendung und Datenvolumen kann es zweckmässig sein, das vorgenannte Verfahren nicht nur für Nutzdatensätze einer obersten Ebene der Datenbank auszuführen, sondern auch für ein einzelnes datenvolumenmässig grosses Feld eines solchen Nutzdatensatzes. In diesem Fall wird für die Übermittlung zur mobilen Anwendung zusätzlich ein Schlüssel übergeben, die das betreffende Feld (oder den betreffenden Datensatz) kennzeichnet. Die Angabe in der Klammer gilt für geschachtelte Datenstrukturen in der Art «record of record».

Die vorgenannte Journaldatei kann als Teil der Datenbasis 24 über den Datenbankdienst 22 geführt werden oder wegen der direkten Interaktion mit der mobilen Anwendung und der SAP /ERP-System durch die den Business Service (web-Dienst) 25 und/oder Administration (Web Anwendung) 26.

Der praktische Ablauf ergibt sich wie folgt:

Auftragsübermittlung an Servicetechniker: Die Disposition des betreffenden Unternehmens im Servicebereich weist einem ihrer Servicetechniker im SAP/ERP-System 30 einen Auftrag zu. Der Servicetechniker ist mit einem mobilen Gerät ausgerüstet und kann dort jederzeit die ihm zugeteilten Aufträge einsehen. Nach der Zuweisung eines neuen Auftrages wird ihm dieser (und nur dieser) übertragen und auf dem Gerät angezeigt. Der Servicetechniker erspart sich eine lange Wartezeit, da ihm nur gezielt der neu zugeteilte Auftrag übermittelt und die Änderung der bestehenden Datenbasis hinzugefügt wird.

**Liste der verwendeten Bezugszeichen und Symbole, Glossar**

| | |
|---|---|
| 10 | Mobile Anwendung, mobile application |
| 12 | Übertragungsstrecke Mobile Anwendung - Middleware |
| 20 | zentralserver, Middleware, Zentralrechner |
| 21 | Schedule Service (Windows) |
| 22 | Datenbankdienst (windows) |
| 23 | SAP - Business Konnektor |
| 24 | Database, Datenbank |
| 25 | Business Service, Web-Dienst |
| 26 | Administration, Web Anwendung |
| 30 | ERP SAP R/3 System |
| ERP | Enterprise Resource Planning |
| $t_0, t_1, t_2$ | Nachführzeitpunkte mit $t_0 < t_1 < t_2$ |
| $t_A$ | Zeitstempel für «hinzugefügt», «added» |
| $t_M$ | Zeitstempel für «verändert», «modified» |
| $t_D$ | Zeitstempel für «gelöscht», «deleted» |
| $t_W$ | Wartezeit, Latenzzeit |

**Literaturliste**

[1] US 2003/0233266 A1
«System and method for executing mobile commerce»
Fu-Yu Liu et al.; Taipei; TW
[2] WO 2004/055659 A1

«System and Method for mobile communication»
Bea Systems, Inc, San Jose CA US.

**Patentansprüche**

**1.** Verfahren zur Nachführung von Geschäftsdaten für eine Anwendung (10) auf einem portablen Gerät, das mit einem abgesetzten Zentralserver (20) verbindbar (12) ist, wobei die Geschäftsdaten in Datensätzen gegliedert und auf dem portablen Gerät (DB CE) und auf dem zentralserver (20, 24) abgespeichert sind und wobei Datensätze auf dem Zentralserver (20, 24) einer Änderung unterworfen sind,
**dadurch gekennzeichnet, dass**
im Zentralserver (20, 24) eine Journal-Datei geführt wird, in der der Änderungszustand eines Datensatzes geführt wird und
dass bei einer verbindung zwischen Zentralserver (20, 24) und portablen Gerät nur jene Datensätze übertragen werden, für die in der Journaldatei ein Änderungskennzeichen eingetragen ist.

**2.** Verfahren nach Anspruch 1,
**dadurch gekennzeichnet, dass**
der Änderungszustand die Ausprägungen

- eingefügt,
- geändert und
- gelöscht

umfasst.

**3.** Verfahren nach Anspruch 2,
**dadurch gekennzeichnet, dass**
zu jeder Ausprägung des Änderungszustandes ein zugehöriger Zeitstempel geführt wird, der den letzten Zeitpunkt der betreffenden Ausprägung beinhaltet.

**4.** Verfahren nach einem der Ansprüche 1 bis 3,
**dadurch gekennzeichnet, dass**
für eine Mehrzahl von portablen Geräten mit der Anwendung im Zentralserver (20, 24) eine anwendungsindividuelle Journal-Datei geführt wird.

**5.** verfahren nach einem der Ansprüche 1 bis 4,
**dadurch gekennzeichnet, dass**
für einzelne Felder eines in Felder gegliederten Datensatzes eine Journal-Datei geführt wird, in der der Änderungszustand der einzelnen Felder enthalten ist.

**Fig. 1**

EP 1 832 988 A1

| ID, Key | state | Insert date/time | update date/time | delete date/time |
|---------|-------|------------------|------------------|------------------|

rec

**Fig. 2**

EP 1 832 988 A1

Fig. 3

**Europäisches Patentamt**

**EUROPÄISCHER RECHERCHENBERICHT**

Nummer der Anmeldung

EP 06 00 4449

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2005/193028 A1 (OSWALT LONNY L) 1. September 2005 (2005-09-01) * Zusammenfassung; Ansprüche 1-34; Abbildungen 1,6 * * Absätze [0018], [0068], [0077] - [0085] * ----- | 1-5 | INV. G06F17/30 |
| X | US 5 926 816 A (BAUER ET AL) 20. Juli 1999 (1999-07-20) * Zusammenfassung; Ansprüche 1-38 * * Spalte 1, Zeile 50 - Spalte 5, Zeile 8 * ----- | 1-5 | |
| X | US 2002/120791 A1 (SOMALWAR KIRAN ET AL) 29. August 2002 (2002-08-29) * Zusammenfassung; Ansprüche 1-18 * * Absätze [0007], [0029] * * Absatz [0016] - Absatz [0019] * ----- | 1-5 | |
| X | US 6 516 314 B1 (BIRKLER JOERGEN ET AL) 4. Februar 2003 (2003-02-04) * Zusammenfassung; Ansprüche 1-20 * * Spalte 2, Zeile 30 - Spalte 5, Zeile 17 * ----- | 1-5 | RECHERCHIERTE SACHGEBIETE (IPC) G06F H04L |
| X | WO 02/054236 A (SYNCHROLOGIC, INC) 11. Juli 2002 (2002-07-11) * Zusammenfassung; Ansprüche 1-20 * * Seiten 3,5 * * Seite 10 - Seite 11 * ----- | 1-5 | |

Der vorliegende Recherchenbericht wurde für alle Patentansprüche erstellt

| Recherchenort | Abschlußdatum der Recherche | Prüfer |
|---|---|---|
| Den Haag | 16. Juni 2006 | Streit, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 06 00 4449

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-06-2006

| Im Recherchenbericht angeführtes Patentdokument | Datum der Veröffentlichung | Mitglied(er) der Patentfamilie | Datum der Veröffentlichung |
|---|---|---|---|
| US 2005193028 A1 | 01-09-2005 | KEINE | |
| US 5926816 A | 20-07-1999 | KEINE | |
| US 2002120791 A1 | 29-08-2002 | KEINE | |
| US 6516314 B1 | 04-02-2003 | AT 295576 T<br>AU 1590500 A<br>BR 9915382 A<br>CN 1118773 C<br>DE 69925302 D1<br>DE 69925302 T2<br>EP 1131757 A2<br>JP 2002530751 T<br>WO 0029998 A2 | 15-05-2005<br>05-06-2000<br>14-08-2001<br>20-08-2003<br>16-06-2005<br>13-10-2005<br>12-09-2001<br>17-09-2002<br>25-05-2000 |
| WO 02054236 A | 11-07-2002 | EP 1352343 A2<br>JP 2004528621 T | 15-10-2003<br>16-09-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030233266 A1

- WO 2004055659 A1